# EUROPEAN PATENT APPLICATION

(11) **EP 4 625 780 A1**
(43) Date of publication of application: **01.10.2025**
(21) Application number: 25166839.8
(22) Date of filing: 27.03.2025
(51) Int. Cl.: H02K 11/225, H02K 13/00, H02K 1/20, H02K 1/32, H02K 7/116, H02K 9/19

(54) **MOTOR DEVICE AND VEHICLE**

(30) Priority: 29.03.2024 CN 202410382776
(71) Applicant: BYD Company Limited, Shenzhen, Guangdong 518118 (CN)
(72) Inventor: LING, Heping, Shenzhen, 518118 (CN); PAN, Hua, Shenzhen, 518118 (CN); YU, Ganghua, Shenzhen, 518118 (CN); ZHAI, Zhen, Shenzhen, 518118 (CN); YANG, Ning, Shenzhen, 518118 (CN)
(74) Representative: Taor, Simon Edward William

(57) **Abstract**

The present invention discloses a motor device and a vehicle. The motor device includes: a stator assembly and a rotor assembly. An interior of the stator assembly forms an accommodating space. The rotor assembly includes a rotor body and a rotating shaft. The rotating shaft is connected to the rotor body. The rotor body is located in the accommodating space of the stator assembly. The rotating shaft includes a first end and a second end protruding from two ends in an axial direction of the rotor body. An electric brush assembly is arranged at the first end. A rotating transformer assembly is arranged at the second end.

## Description

### FIELD

The present invention relates to the technical field of motors, and more specifically, to a motor device and a vehicle.

### BACKGROUND

In a related art, an electric excitation motor typically includes a housing, a stator assembly, and a rotor assembly. The stator assembly and the rotor assembly are located in the housing. Both the stator assembly and the rotor assembly are provided with coil windings. However, in general, a high voltage difference will be formed when an electric brush of the electric brush assembly is powered on. The high voltage difference causes interference to a measurement signal of a rotating transformer assembly.

Therefore, it is necessary to provide a new technical solution to solve the foregoing problem.

### SUMMARY

An objective of the present invention is to provide a new technical solution of a motor device.

According to a first aspect of the present invention, a motor device is provided. The device includes: a stator assembly and a rotor assembly. An interior of the stator assembly forms an accommodating space. The rotor assembly includes a rotor body and a rotating shaft. The rotating shaft is connected to the rotor body. The rotor body is located in the accommodating space of the stator assembly. The rotating shaft includes a first end and a second end protruding from two ends in an axial direction of the rotor body. An electric brush assembly is arranged at the first end. A rotating transformer assembly is arranged at the second end.

In some arrangements, the stator assembly includes: a first winding; and a stator body. The stator body is connected to the first winding. Multiple heat dissipation channels are formed in the stator body. The multiple heat dissipation channels are formed in a circumferential direction of the stator body. The density of the heat dissipation channels located in an upper part of the stator body is greater than that of the heat dissipation channels located in a lower part of the stator body.

In some arrangements, the heat dissipation channels extend in an axial direction of the stator body.

In some arrangements, the stator body is annular. A central part of the stator body forms the accommodating space. The multiple heat dissipation channels are located on one side, departing from the accommodating space, of the stator body.

In some arrangements, the multiple heat dissipation channels are divided into multiple groups of heat dissipation channels formed in an axial direction of the stator body. Each group of heat dissipation channels are formed in the circumferential direction of the stator body. A gap is formed between two adjacent groups of heat dissipation channels. The gaps are applicable to connecting inlets of the heat dissipation channels.

In some arrangements, two first windings are included. The two first windings are respectively located on both sides of the axial direction of the stator body.

In some arrangements, the electric brush assembly includes a mounting frame, a first electric brush and a second electric brush. The first electric brush and the second electric brush are elastically mounted on the mounting frame. The mounting frame is sleeved over the rotating shaft.

In some arrangements, a first sliding ring and a second sliding ring are arranged on the rotating shaft. The first sliding ring is in contact with the first electric brush. The second sliding ring is in contact with the second electric brush. The first sliding ring and the second sliding ring are arranged in the axial direction of the rotating shaft.

In some arrangements, the first electric brush and the second electric brush are slidably arranged on the mounting frame. An elastic element is arranged between the mounting frame and the first electric brush and an elastic element is arranged between the mounting frame and the second electric brush.

In some arrangements, the first electric brush and the second electric brush have the same model.

In some arrangements, a cable mounting seat is further included. The cable mounting seat is connected to conducting wires of the first windings.

In some arrangements, the cable mounting seat includes a fixed part and an accommodating part. The accommodating part is provided with an accommodating groove. The accommodating groove is applicable to accommodating the conducting wire. The accommodating part is connected to the fixed part. The fixed part is located at a nick of the accommodating groove.

In some arrangements, the cable mounting seat further includes a conducting bar. A connecting hole is formed in one end of the conducting bar. The connecting hole is applicable to connecting a wire end of the conducting wire of the first winding. A first through hole is formed in the other end of the conducting bar. The fixed part is provided with a threaded hole opposite to the first through hole.

In some arrangements, the fixed part has a bottom and a side. The accommodating part is located at the bottom. The threaded hole is located at the side.

In some arrangements, a sink groove is formed in the side of the fixed part. The threaded hole is formed in the sink groove. One end of the conducting bar is embedded into the sink groove.

In some arrangements, the fixed part is provided with a first convex lug. The accommodating part is provided with a second convex lug. The first convex lug is connected to the second convex lug.

In some arrangements, a speed reducing mechanism and a heat exchange mechanism are further included. The speed reducing mechanism is connected to the rotating shaft. The heat exchange mechanism is connected to the speed reducing mechanism.

In some arrangements, the heat exchange mechanism includes multiple laminated metal sheets. A heat conducting flow channel is formed between two adjacent metal sheets.

According to a second aspect of the present invention, a vehicle is provided. The vehicle includes the motor device described according to any item of the above.

In the examples of the present invention, the electric brush assembly and the rotating transformer assembly are respectively arranged at two ends of the rotating shaft. Thus, the distance between the electric brush assembly and the rotating transformer assembly is large, and parts such as the stator assembly is arranged between the electric brush assembly and the rotating transformer assembly. Through such arrangement, high voltage difference of the electric brush assembly will not cause adverse effects to measurement accuracy of the rotating transformer assembly.

Other features and advantages of the present invention will become apparent from the following detailed description of exemplary examples of the present invention with reference to accompanying drawings.

### BRIEF DESCRIPTION OF THE DRAWINGS

Accompanying drawings incorporated into and constituting a part of this specification show examples of the present invention, and are used to explain a principle of the present invention together with the examples.
FIG. 1 is an exploded view of a motor according to an example of the present invention.
FIG. 2 is a cross-sectional view of a motor according to an example of the present invention.
FIG. 3 is a decomposition diagram of a cable mounting seat and a stator assembly according to an example of the present invention.
FIG. 4 is a three-dimensional view of a rotating shaft according to an example of the present invention.
FIG. 5 is a side view of a stator body according to an example of the present invention.

In the drawings:
1, electric brush assembly; 2, first bearing; 3, bearing pressing plate; 4, cable mounting seat; 5, first winding; 51, connecting tooth; 6, stator body; 61, heat dissipation channel; 62, gap; 7, rotor body; 8, first sliding ring; 9, rotating shaft; 91, first end; 92, second end; 10, rotating transformer stator; 11, rotating transformer rotor; 12, second bearing; 13, first snap ring; 14, third bearing; 15, first transmission gear shaft; 16, fourth bearing; 17, second snap ring; 19, second transmission gear shaft; 27, oil pump; 28, heat exchange mechanism; 29, connector; 31, first electric brush; 30, second electric brush; 32, second siding ring; 33, accommodating part; 331, accommodating groove; 332, second convex lug; 34, fixed part; 341, first convex lug; 342, sink groove; 343, threaded hole; 35, conducting bar; 351, first through hole; 36, mounting frame; and 37, conducting wire.

### DETAILED DESCRIPTION

Various exemplary examples of the present invention are now described in detail with reference to accompanying drawings. It is to be noted that: unless otherwise specified, opposite arrangement, numerical expressions, and numerical values of parts and steps described in the examples do not limit the scope of the present invention.

The following descriptions for at least one exemplary example are merely illustrative, and is not used as any limitation to the present invention and application or use of the present invention.

Technologies, methods, and equipment known to those of ordinary skill in a related art may not be discussed in detail, but where appropriate, the technologies, the methods, and the equipment are not to be considered as a part of the specification.

In all examples shown and discussed herein, any specific value is to be interpreted as merely illustrative and not restrictive. Therefore, other examples of exemplary examples may have different values.

It is to be noted that: similar reference signs and letters represent similar items in the following drawings. Therefore, once an item is defined in a drawing, this item does not need to be further discussed in subsequent drawings.

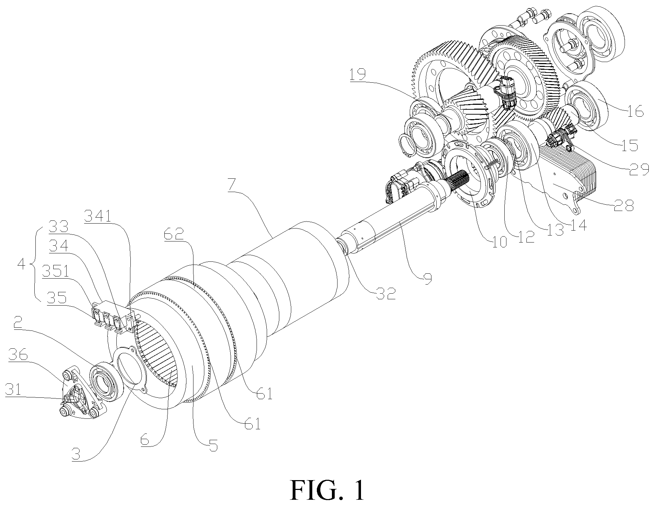

According to an example of the present invention, a motor device is provided. As shown in FIG. 1 to FIG. 5, the motor device includes:
a stator assembly and a rotor assembly. An interior of the stator assembly forms an accommodating space. The rotor assembly includes a rotor body 7 and a rotating shaft 9. The rotating shaft 9 is connected to the rotor body 7. The rotor body 7 is located in the accommodating space of the stator assembly. The rotating shaft 9 includes a first end 91 and a second end 92 protruding from two ends in an axial direction of the rotor body 7. An electric brush assembly 1 is arranged at the first end 91. A rotating transformer assembly is arranged at the second end 92.

In an example, the motor device is an electric excitation motor. The motor device has the characteristics of good heat dissipation effect. The rotating shaft 9 is connected to the rotor body 7 through interference fit or integral molding. The rotor body 7 is located in the accommodating space of the stator assembly. The rotor body 7 rotates in the accommodating space.

The rotor body 7 includes a rotor core and a second winding. The rotor core is, for example, sintered iron. The rotor core may be of an integrated structure or may or multiple laminated metal sheets. The second winding is arranged on the rotor core. For example, the second winding is wound along a radial direction of the rotor core. That is, an axial direction of the second winding is parallel to the radial direction of the rotor core. The rotor body 7 is located in the accommodating space of the stator assembly. The radial direction of the rotor core is parallel to a radial direction of a stator body 6. An axial direction of the rotor core is parallel to an axial direction of the stator body 6. The rotor body 7 is connected to the rotating shaft 9 in a key-groove connection manner. The rotating shaft 9 has an axial through hole. The axial through hole of the rotating shaft 9 is configured for heat transfer oil to pass through, so as to cool the rotating shaft 9 and/or the rotor assembly.

The second winding is powered by a direct current. The second winding forms a magnetic field after being powered. The magnetic field interacts with the magnetic field formed by the first winding 5, so as to enable the rotor assembly to rotate.

The motor device further includes an electric brush assembly 1 and a rotating transformer assembly. The rotating shaft 9 includes a first end 91 and a second end 92 protruding from two ends in an axial direction of the rotor body 7. The electric brush assembly 1 is arranged at the first end 91. The rotating transformer assembly is arranged at the second end 92.

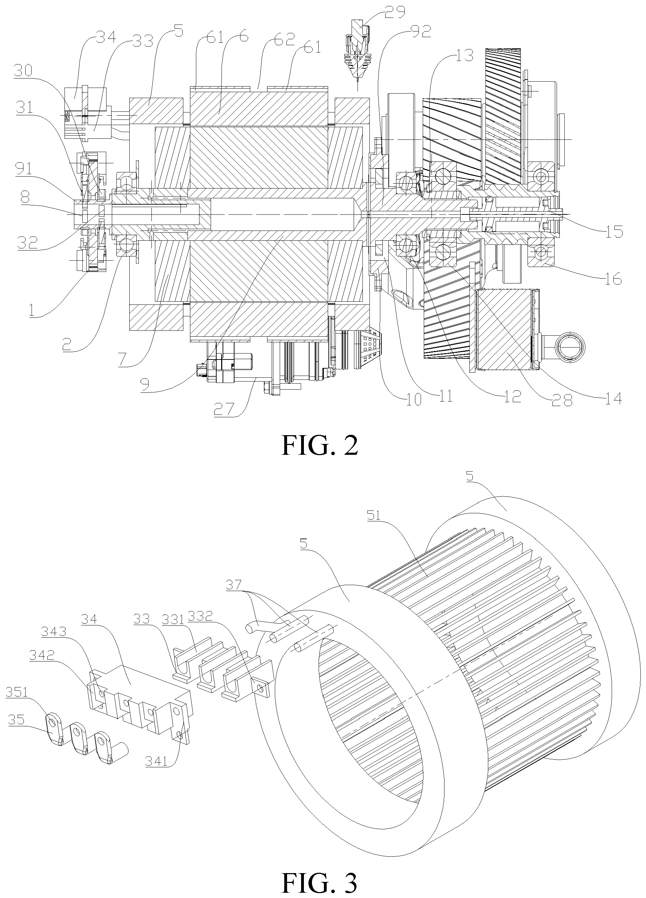

As shown in FIG. 1 and FIG. 2, the electric brush assembly 1 is fixed to a housing (not shown) of the motor device. The electric brush assembly 1 is sleeved over the first end 91 of the rotating shaft 9. The rotating shaft 9 can rotate relative to the electric brush assembly 1. A first bearing 2 is further arranged at the first end 91. The electric brush assembly 1 and the first bearing 2 are arranged on the housing of the motor device. The rotating transformer assembly is configured to measure an angular displacement and an angular velocity of the rotating shaft 9 of a rotating object. The rotating transformer assembly includes a rotating transformer stator and a rotating transformer rotor 11 sleeved over the rotating transformer stator 10. The rotating transformer stator 10 is fixedly connected to the rotating shaft 9. The rotating transformer rotor 11 is fixed to the housing of the motor device. The rotating transformer assembly is connected to an external circuit through a connector 29.

In general, a high voltage difference will be formed when an electric brush of the electric brush assembly 1 is powered on. The high voltage difference causes interference to a measurement signal of a rotating transformer assembly. In one example, the electric brush assembly 1 and the rotating transformer assembly are respectively arranged at two ends of the rotating shaft 9. Thus, the distance between the electric brush assembly 1 and the rotating transformer assembly is large, and parts such as the stator assembly is arranged between the electric brush assembly and the rotating transformer assembly. Through such arrangement, high voltage difference of the electric brush assembly 1 will not cause adverse effects to measurement accuracy of the rotating transformer assembly.

In an example, to facilitate the connection between the rotating shaft 9 and other parts, the rotating shaft 9 is a hollow step shaft. At the first end 91, a first step of the rotating shaft 9 is configured to arrange the electric brush assembly 1. A second step of the rotating shaft 9 is configured to arrange the first bearing 2. At the second end 92, the second end 92 of the rotating shaft 9 has teeth. The rotating shaft 9 is in transmission connection with a first transmission gear shaft 15 of a speed reducing mechanism through the teeth. There is a third step, a fourth step, and a fifth step at the second end 92. The third step is configured to arrange the rotating transformer stator 10. The fourth step is configured to arrange a second bearing 12. The second bearing 12 is located through a first snap spring 13. A fifth step is configured to arrange a third bearing 14. Thus, from the first end 91 to the second end 92, the electric brush assembly 1, the first bearing 2, the rotating transformer stator 10, the second bearing 12, and the third bearing 14 are arranged on the rotating shaft 9 in sequence.

In an example, the stator body includes: a first winding 5; and
a stator body 6. The stator body 6 is connected to the first winding 5. The stator body 6 is provided with multiple heat dissipation channels 61. The multiple heat dissipation channels 61 are formed in a circumferential direction of the stator body 6. The density of the heat dissipation channels 61 located in an upper part of the stator body 6 is greater than that of the heat dissipation channels 61 located in a lower part of the stator body 6.

In an example, the first winding 5 includes a coil wound by a metal wire. The metal wire may be, but is not limited to, a copper wire, an aluminum wire, a gold wire, a silver wire, and the like. The first winding 5 may include a coil, or may include multiple coils. The first winding 5 is configured to form a magnetic field. There may be one or more first windings 5. The stator body 6 is configured to fix the first winding 5. The stator body 6 can concentrate the magnetic field. For example, the stator body 6 is made of low-carbon steel. The stator body 6 is of an integrated structure, or the stator body 6 includes multiple metal sheets laminated together.

As shown in FIG. 3, two first windings 5 are connected together through multiple connecting teeth 51 arranged in a circumferential direction. The multiple connecting teeth 51 are located between the two first windings 5. Adjacent connecting teeth 51 are spaced. As shown in FIG. 1 and FIG. 2, the stator body 6 is provided with a connecting groove configured to accommodate the connecting teeth 51. The connecting teeth 51 are embedded into the connecting groove, for example, interference fit is formed between the connecting teeth 51 and the connecting groove, so as to fixedly connect the stator body 6 and the first winding 5. For example, the first winding 5 is a three-phase winding. Three wire ends of the three-phase winding are respectively connected to a control circuit of the motor device.

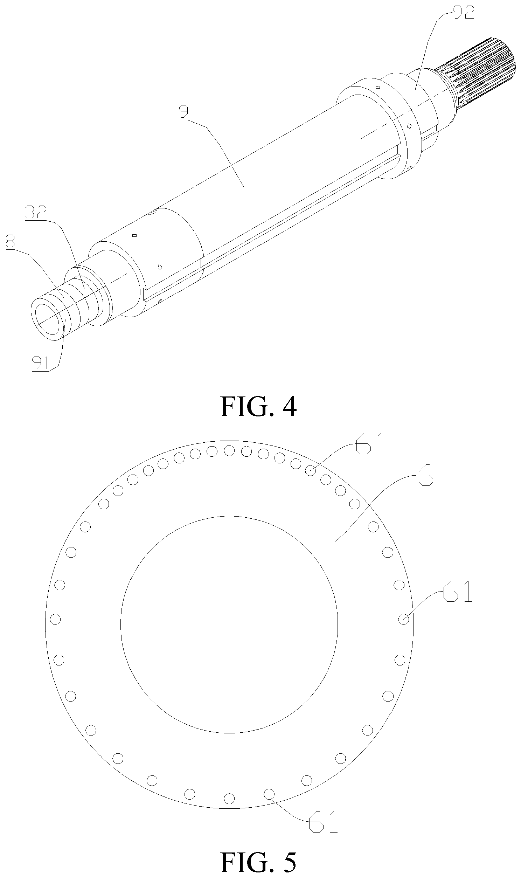

The stator body 6 encloses to form the accommodating space. The accommodating space is configured to accommodate a rotor of a motor. The stator body 6 is provided with multiple heat dissipation channels 61. The heat dissipation channels 61 are configured for a heat exchange medium to pass through. The heat exchange medium is, for example, heat transfer oil. The heat transfer oil includes hot oil, silicone oil, and the like. A cross section of the heat dissipation channel 61 may be, but is not limited to, circular, rectangular, triangular, elliptical, trapezoidal, and the like. The multiple heat dissipation channels 61 have the same shapes and dimensions. Or, the multiple heat dissipation channels 61 have the same cross-sectional area. The heat transfer oil enters from one end of each heat dissipation channel 61, and flows out from the other end of each heat dissipation channel 61. As shown in FIG. 5, the multiple heat dissipation channels 61 are arranged in the circumferential direction of the stator body 6. Under the impact of gravity, the heat transfer oil flows from an upper part of the stator body 6 to a lower part of the stator body 6, which leads to that the heat transfer oil in the lower part of the stator body 6 is more than the heat transfer oil in the upper part of the stator body 6, and the heat in the upper part of the stator body 6 is not easily brought away by the heat transfer oil.

In an example, the density of the heat dissipation channels 61 located in the upper part of the stator body 6 is greater than that of the heat dissipation channels 61 located in the lower part of the stator body 6. The higher the density of the heat dissipation channels 61, the greater the amount of the heat transfer oil that can be accommodated. Thus, the amount of the heat transfer oil in the upper part of the stator body 6 is greater than the amount of the heat transfer oil in the lower part of the stator body 6, so that more heat transfer oil can absorb the heat in the upper part of the stator body 6, thereby effectively improving the heat dissipation effect of the upper part of the stator body 6. The stator body 6 dissipates heat more uniformly.

In addition, the higher the density of the heat dissipation channels 61, the lower the flow resistance of the heat transfer oil. On the contrary, the lower the density of the heat dissipation channels 61, the greater the flow resistance of the heat transfer oil. Through such arrangement of the examples of the present invention, the flow resistance of the heat transfer oil in the lower part of the stator body 6 is greater than the flow resistance of the heat transfer oil in the upper part of the stator body 6, so that the resistance that the heat transfer oil flows to the lower part of the stator body 6 increases. Thus, more heat in the upper part of the stator body 6 can be absorbed by the heat transfer oil, thereby improving the heat exchange efficiency of the stator body 6.

It is to be noted that, under the condition that the shapes, the dimensions, or the cross-sectional area of the multiple heat dissipation channels 61 are the same, the stator body 6 is easier to prepare, and the heat dissipation channels 61 are easier to design. However, the shapes, the dimensions, or the cross-sectional area of the multiple heat dissipation channels 61 may be different, as long as ensuring good heat dissipation effect of the upper part of the stator body 6.

In an example, the heat dissipation channels 61 extend in an axial direction of the stator body 6.

As shown in FIG. 1 and FIG. 2, the heat dissipation channels 61 are parallel to the circumferential direction of the stator body 6. Thus, the dimensions of the heat dissipation channels 61 passing through the stator body 6 are large, so that the heat transfer oil can absorb more heat of the stator body 6, thereby further improving the heat dissipation effect of the stator body 6.

In addition, the heat dissipation channels 61 are relatively easy to prepare due to such arrangement.

In some examples, the heat dissipation channels 61 may be other shapes, for example, arcs and wavy lines.

In an example, the stator body 6 is annular. A central part of the stator body 6 forms the accommodating space. The multiple heat dissipation channels 61 are located on one side, departing from the accommodating space, of the stator body 6.

As shown in FIG. 1 and FIG. 2, the stator body 6 is of a cylindrical annular structure. The central part of the stator body 6 is a cylindrical accommodating space. The heat dissipation channels 61 are located on an outer wall of the stator body 6. The heat transfer oil generally enters from the housing of the motor device. The heat dissipation channels 61 are located on the outer wall of the stator body 6, so that the heat transfer oil directly enters the heat dissipation channels 61 after passing through the housing, the heat transfer oil dissipates heat more timely, and the heat dissipation effect is better.

The stator body 6 may alternatively be in a rectangular ring shape, an elliptical ring shape, and the like. Positions of the heat dissipation channels 61 are not limited thereto, and those skilled in the art may set according to actual needs.

In an example, the multiple heat dissipation channels 61 are divided into multiple groups of heat dissipation channels 61 formed in an axial direction of the stator body 6. Each group of heat dissipation channels 61 are formed in the circumferential direction of the stator body 6. A gap 62 is formed between two adjacent groups of heat dissipation channels 61. The gaps 62 are applicable to connecting inlets of the heat dissipation channels 61.

As shown in FIG. 1 and FIG. 2, two groups of heat dissipation channels 61 are arranged in the circumferential direction of the stator body 6. The multiple heat dissipation channels 61 of both groups of heat dissipation channels 61 are that the density in the upper part of the stator body 6 is greater than the density in the lower part of the stator body 6. A gap 62 is formed between the two groups of heat dissipation channels 61. Inlets of the heat dissipation channels 61 are communicated with the gap 62.

During use, the heat transfer oil reaches the gap 62 after entering from the housing. The heat transfer oil flows from the gap 62 to the heat dissipation channels 61 on the two sides, and then flows out from one end, departing from the gap 62, of the heat dissipation channel 61. Next, the heat transfer oil flows down along the stator assembly. The housing has a structure for recycling the heat transfer oil. The recycled heat transfer oil dissipated heat through the heat exchange mechanism, flows through an oil pump 27, and is recycled again. The longer the length of the heat dissipation channels 61, the greater the flow resistance of the heat transfer oil. On the contrary, the shorter the length of the heat dissipation channels 61, the smaller the flow resistance of the heat transfer oil. Compared with the heat dissipation channels 61 penetrating through the axial direction of the stator body 6, through such arrangement, the flow resistance of the heat transfer oil can be effectively reduced, so that the heat dissipation effect of the stator body 6 is better.

Those skilled in the art may set the number of groups of heat dissipation channels 61 and the length of the heat dissipation channels 61 according to actual needs.

In an example, the stator assembly includes two first windings 5, and the two first windings 5 are respectively located on both sides of the axial direction of the stator body 6.

As shown in FIG. 1 and FIG. 2, the two first windings 5 are connected together through multiple connecting teeth 51. The stator body 6 is located between the two first windings 5. The two first windings 5 can provide a stronger magnetic field. For example, a flow guide groove for the heat transfer oil to flow down is formed between the each of the two first windings 5 and the stator body 6. The flow guide groove can prevent the heat transfer oil from flowing to the other positions of the stator assembly, so that the heat transfer oil is easier to recycle.

The two first windings 5 can provide a stronger magnetic field, so that the motor device has a higher driving force.

The number and the arrangement manner of the first windings 5 are not limited to the foregoing examples. Those skilled in the art may set according to actual needs.

In an example, the electric brush assembly 1 includes a mounting frame 36, a first electric brush 31, and a second electric brush 30. The first electric brush 31 and the second electric brush 30 are elastically mounted on the mounting frame 36. The mounting frame 36 is sleeved over the rotating shaft 9.

As shown in FIG. 1 and FIG. 2, the mounting frame 36 is triangular. The mounting frame 36 is made of metal, plastics, and the like. The mounting frame 36 is fixed to the housing the motor device. The first electric brush 31 is mounted on one side, departing from the stator assembly, of the mounting frame 36, and is embedded into the mounting frame 36. The second electric brush 30 is mounted on one side, close to the stator assembly, of the mounting frame 36, and is embedded into the mounting frame 36. The first electric brush 31 is spaced from the second electric brush 30 by the mounting frame, so that respective electrical connections of the two electric brushes cannot interfere with each other. The first electric brush 31 and the second electric brush 30 can elastically move relative to the mounting frame 36, so as to support a sliding ring on the rotating shaft 9, thereby ensuring conductivity of the second winding. The electric brush assembly 1 may be mounted in advance, which is mounted on the housing of the motor device as a whole during use.

In an example, the first electric brush 31 and the second electric brush 30 may adopt conventional carbon electric brushes in a related art. In an example, the first electric brush 31 and the second electric brush 30 have the same model. Thus, the electric brush assembly 1 is simple in structure and easy to replace.

In an example, a first sliding ring 8 and a second sliding ring 32 are arranged on the rotating shaft 9. The first sliding ring 8 is in contact with the first electric brush 31. The second sliding ring 32 is in contact with the second electric brush 30. The first sliding ring 8 and the second sliding ring 32 are arranged in an axial direction of the rotating shaft 9.

As shown in FIG. 2 and FIG. 4, the first sliding ring 8 and the second sliding ring 32 are embedded into the rotating shaft 9. The first sliding ring 8 and the second sliding ring 32 are separately connected to a conducting wire of the second winding. The first sliding ring 8 is in contact with the first electric brush 31. The second sliding ring 32 is in contact with the second electric brush 30. The first electric brush 31 and the second electric brush 30 are electrically connected to an external circuit. An electric signal of the external circuit is transmitted to the second winding through the first electric brush 31, the second electric brush 30, the first sliding ring 8, and the second sliding ring 32.

In an example, the first sliding ring 8 and the second sliding ring 32 are arranged in the axial direction of the rotating shaft 9. For example, the first sliding ring 8 and the second sliding ring 32 are arranged in parallel. Through such arrangement, the electrical connection between the first sliding ring 8 and the first electric brush 31 and the electrical connection between the second sliding ring 32 and the second electric brush 30 are more stable.

In an example, a bearing pressing plate 3 is arranged at the first end 91 of the rotating shaft 9. The first electric brush 31 and the second electric brush 30 can be in contact with the first sliding ring 8 and the second sliding ring 32 through the bearing pressing plate 3 respectively.

In an example, the first electric brush 31 and the second electric brush 30 are slidably arranged on the mounting frame 36. An elastic element is arranged between the mounting frame 36 and the first electric brush 31 and an elastic element is arranged between the mounting frame 36 and the second electric brush 30.

As shown in FIG. 1 and FIG. 2, chutes are formed in the mounting frame 36. The first electric brush 31 and the second electric brush 30 are slidably arranged in respective chutes. The elastic elements are arranged in the chutes. The elastic elements may be, but are not limited to, springs, elastic sheets, elastic rubber parts, elastic silicone parts, and the like. The elastic element is clamped between the mounting frame 36 and the first electric brush 31 and between the mounting frame 36 and the second electric brush 30, so that the first electric brush 31 and the second electric brush 30 respectively support the first sliding ring 8 and the second sliding ring 32. Through such arrangement, the sliding and the electrical connection of the first electric brush 31 and the second electric brush 30 relative to the mounting frame 36 are more stable.

Those skilled in the art may set the quantities and specific mounting positions of the first electric brushes 31 and the second electric brushes 30 according to actual needs. No limitations are made thereto.

In an example, the motor device further includes a cable mounting seat 4. The cable mounting seat 4 is connected to conducting wires 37 of the first windings 5.

As shown in FIG. 1 to FIG. 3, the cable mounting seat 4 is fixed to the housing of the motor device. The cable mounting seat 4 is configured for the electrical connection between the first winding 5 and the control circuit. The conducting wire 37 of the first winding 5 is connected to the cable mounting seat 4. The control circuit is connected to the cable mounting seat 4.

The cable mounting seat 4 facilitates the electrical connection between the first winding 5 and the control circuit.

In an example, the cable mounting seat 4 includes a fixed part 34 and an accommodating part 33. The accommodating part 33 is provided with an accommodating groove 331. The accommodating groove 331 is applicable to accommodating the conducting wire 37. The accommodating part 33 is connected to the fixed part 34. The fixed part 34 is located at a nick of the accommodating groove 331.

As shown in FIG. 1 to FIG. 3, the fixed part 34 is fixed to the housing of the motor device. The accommodating part 33 is fixedly connected to the fixed part 34. A connection manner may be, but is not limited to, bolt connection, clamping, bonding, and the like. The fixed part 34 and the accommodating part 33 are made of insulating materials, such as ceramics, plastics, rubber, and silica gel. The accommodating groove 331 is configured to accommodate the conducting wire 37 of the first winding 5. For example, the first winding 5 is a three-phase winding. The three-phase winding includes three conducting wires 37. The accommodating part 33 includes three accommodating grooves 331 arranged in parallel. The three conducting wires 37 are respectively clamped in the accommodating grooves 331. The accommodating part 33 can effectively isolate the three conducting wires 37, so as to prevent the three conducting wires 37 from interfering one another.

In an example, the arrangement of the fixed part 34 and the accommodating part 33 facilitates the connection between the cable mounting seat 4 and the conducting wire 37, and the cable mounting seat 4 can protect the conducting wire 37.

The cable mounting seat 4 is not limited to the foregoing examples. Those skilled in the art may set according to actual needs.

In an example, the cable mounting seat 4 further includes a conducting bar 35. A connecting hole is formed in one end of the conducting bar 35. The connecting hole is applicable to connecting a wire end of the conducting wire 37 of the first winding 5. A first through hole 351 is formed in the other end of the conducting bar 35. The fixed part 34 is provided with a threaded hole 343 opposite to the first through hole 351.

As shown in FIG. 3, the conducting bar 35 is made of a metal, for example, copper, aluminum, nickel, stainless steel, and the like. The connecting hole of the conducting bar 35 is configured to accommodate the wire end of the conducting wire 37. For example, the wire end is crimped into the corresponding connecting hole in a wire crimping manner. The conducting bar 35 is configured for the electrical connection with the control circuit. For example, the conducting wire of the control circuit is provided with a wiring terminal. The wiring terminal has a wiring hole. The wiring hole is opposite to the first through hole 351. A bolt penetrates through the wiring hole and the first through hole 351 to be in threaded connection with a threaded hole 343 of the fixed part 34, so that the conducting bar 35 is in tight contact with the wiring terminal, thereby forming an electrical connection. In an example, the arrangement of the threaded hole 343 of the fixed part 34 and the conducting bar 35 facilitates the electrical connection between the control circuit and the first winding 5.

A structure of the cable mounting seat 4 is not limited thereto. Those skilled in the art may set according to actual needs.

In an example, the fixed part 34 has a bottom and a side. The accommodating part 33 is located at the bottom. The threaded hole 343 is located at the side.

As shown in FIG. 2 and FIG. 3, the bottom of the fixed part 34 is close to the rotor assembly. A side wall of the fixed part 34 departs from the stator assembly. The accommodating part 33 is located at the bottom of the fixed part 34. The fixed part 34 seals the nick of the accommodating groove 331. Through such arrangement, the fixed part 34 can protect the conducting wire 37. A part of the conducting bar 35 is located at the bottom of the fixed part 34, for example, embedded into the accommodating groove 331. The other part of the conducting bar 35 is located at the side of the fixed part 34, so that the conducting bar 35 forms an L-shaped structure. Thus, in an aspect, the overall length of the conducting bar 35 can be reduced, and space is saved. In the other aspect, the conducting bar 35 is made of a metal material. The conducting bar 35 is arranged at the bottom and the side of the fixed part 34, so as to protect the fixed part 34.

Relative positions of the fixed part 34 and the accommodating part 33 are not limited to the foregoing examples. Those skilled in the art may set according to actual needs.

In an example, a sink groove 342 is formed in the side of the fixed part 34. The threaded hole 343 is formed in the sink groove 342. One end of the conducting bar 35 is embedded into the sink groove 342.

As shown in FIG. 3, the sink groove 342 is formed in the side of the fixed part 34. The shape of the sink groove 342 matches the shape of one end of the conducting bar 35. During mounting, the sink groove 342 can accommodate one end of the conducting bar 35, so as to position. The threaded hole 343 is formed in the bottom of the sink groove 342. Thus, when one end of the conducting bar 35 is embedded into the sink groove 342, the first through hole 351 of the conducting bar 35 can be opposite to the threaded hole 343. The sink groove 342 can effectively locate the conducting bar 35, so as to facilitate alignment of the first through hole 351 and the threaded hole 343.

In an example, the fixed part 34 is provided with a first convex lug 341. The accommodating part 33 is provided with a second convex lug 332. The first convex lug 341 is connected to the second convex lug 332.

As shown in FIG. 1 and FIG. 3, the convex lug is a structure that protrudes from a part where the convex lug is located. For example, the first convex lug 341 and the second convex lug 332 are provided with through holes. The first convex lug 341 and the second convex lug 332 are connected together through a bolt. The arrangement of the first convex lug 341 and the second convex lug 332 facilitates connection between the fixed part 34 and the accommodating part 33. For example, the first convex lug 341 is provided with a groove or a step structure configured to locate the second convex lug 332. During connecting, the second convex lug 332 is located on the groove or the step structure. Thus, the location of the first convex lug 341 and the second convex lug 332 is facilitated.

Connection manners of the fixed part 34 and the accommodating part 33 are not limited to the foregoing examples. Those skilled in the art may set according to actual needs.

In an example, the motor device further includes a speed reducing mechanism and a heat exchange mechanism 28. The speed reducing mechanism is connected to the rotating shaft 9. The heat exchange mechanism 28 is connected to the speed reducing mechanism.

As shown in FIG. 1 and FIG. 2, the speed reducing mechanism is located at the second end 92 of the rotating shaft 9. The motor outputs power through the speed reducing mechanism. The heat exchange mechanism 28 is located below the speed reducing mechanism. The heat exchange mechanism 28 is configured to dissipate heat of the speed reducing mechanism. The speed reducing mechanism includes a first transmission gear shaft 15, a second transmission gear shaft 19, and a speed reducing gear set. Teeth are formed in the first transmission gear shaft 15. The first transmission gear shaft 15 is arranged parallel to the second transmission gear shaft 19. The speed reducing gear set is sleeved over the second transmission gear shaft 19. The speed reducing gear set meshes with the teeth of the first transmission gear shaft 15. The speed reducing gear set may adopt a commonly used combination manner in this art. A fourth bearing 16 is arranged at one end, departing from the rotating shaft 9, of the first transmission gear shaft 15. A shaft of the fourth bearing 16 is located through a second snap spring 17. The fourth bearing 16 is connected to the housing of the motor device. The fourth bearing 16 enables the first transmission gear shaft 15 to rotate more smoothly.

In an example, the heat exchange mechanism 28 includes multiple laminated metal sheets. A heat conducting flow channel is formed between two adjacent metal sheets.

For example, the heat exchange mechanism 28 is a plate type heat exchanger. The metal sheets are in a corrugated shape. The metal sheets are made of copper, aluminum, stainless steel, cast iron, and the like. The heat conducting flow channel with a flat rectangular cross section is formed between the adjacent metal sheets. A heat conducting medium flows in the heat conducting flow channel, so as to bring away the heat of the heat exchange mechanism 28. The heat exchange mechanism 28 can effectively improve the heat dissipation effect of the speed reducing mechanism.

According to an aspect, there is provided a motor device, comprising: a stator assembly and a rotor assembly; wherein an interior of the stator assembly forms an accommodating space; wherein the rotor assembly comprises a rotor body (7) and a rotating shaft (9), wherein the rotating shaft (9) is connected to the rotor body (7); wherein the rotor body (7) is located in the accommodating space of the stator assembly; wherein the rotating shaft (9) comprises a first end (91) and a second end (92) protruding from two ends in an axial direction of the rotor body (7); wherein an electric brush assembly (1) is arranged at the first end (91); and wherein a rotating transformer assembly is arranged at the second end (92).

The stator assembly may comprise: a first winding (5); and a stator body (6), wherein the stator body (6) is connected to the first winding (5), wherein a plurality of heat dissipation channels (61) are formed in the stator body (6), wherein the plurality of heat dissipation channels (61) are formed in a circumferential direction of the stator body (6), and a density of the heat dissipation channels (61) located in an upper part of the stator body (6) is greater than a density of the heat dissipation channels (61) located in a lower part of the stator body (6).

The heat dissipation channels (61) may extend in an axial direction of the stator body (6).

The electric brush assembly (1) may comprise a mounting frame (36), a first electric brush (31) and a second electric brush (30), the first electric brush (31) and the second electric brush (30) may be elastically mounted on the mounting frame (36), and the mounting frame (36) may be sleeved over the rotating shaft (9). The first electric brush (31) and the second electric brush (30) may have the same configuration.

According to another example of the present invention, a vehicle is provided. The vehicle includes the motor device provided by the examples of the present invention. The vehicle includes the foregoing motor device. The vehicle has the characteristics of good heat dissipation effect.

The focus of the previous examples is on the differences between examples. Different optimization features between the examples may be combined to form a better example as long as there is no contradiction, which will not be repeated here considering the simplicity of writing.

Although some specific examples of the present invention have been described in detail by way of examples, those skilled in the art are to be understood that the foregoing examples are only for description and are not intended to limit the scope of the present invention. Those skilled in the art appreciate that modifications may be made to the foregoing examples without departing from the scope and spirit of the present invention. The scope of the present invention is limited by the appended claims.

## Claims

1. A motor device, comprising: a stator assembly and a rotor assembly;
wherein an interior of the stator assembly forms an accommodating space;
wherein the rotor assembly comprises a rotor body (7) and a rotating shaft (9), wherein the rotating shaft (9) is connected to the rotor body (7);
wherein the rotor body (7) is located in the accommodating space of the stator assembly;
wherein the rotating shaft (9) comprises a first end (91) and a second end (92) protruding from two ends in an axial direction of the rotor body (7);
wherein an electric brush assembly (1) is arranged at the first end (91); and
wherein a rotating transformer assembly is arranged at the second end (92).

2. The motor device according to claim 1, wherein the stator assembly comprises:
a first winding (5); and
a stator body (6), wherein the stator body (6) is connected to the first winding (5),
wherein a plurality of heat dissipation channels (61) are formed in the stator body (6), wherein the plurality of heat dissipation channels (61) are formed in a circumferential direction of the stator body (6), and a density of the heat dissipation channels (61) located in an upper part of the stator body (6) is greater than a density of the heat dissipation channels (61) located in a lower part of the stator body (6).

3. The motor device according to claim 2, wherein the heat dissipation channels (61) extend in an axial direction of the stator body (6).

4. The motor device according to claim 2 or 3, wherein the stator body (6) is annular, wherein a central part of the stator body (6) forms the accommodating space, and the plurality of heat dissipation channels (61) are located on a side, departing from the accommodating space, and of the stator body (6).

5. The motor device according to claim 2, wherein the plurality of heat dissipation channels (61) are divided into a plurality of groups of heat dissipation channels (61) formed in an axial direction of the stator body (6),
wherein each of the groups of heat dissipation channels (61) are formed in a circumferential direction of the stator body (6),
wherein gaps (62) are respectively formed between the two adjacent groups of heat dissipation channels (61), and the gaps (62) are configured to connect inlets of the heat dissipation channels (61).

6. The motor device according to any one of claims 2 to 5, comprising two first windings (5), the two first windings (5) being respectively located on both sides of the axial direction of the stator body (6).

7. The motor device according to any one of claims 1 to 6, wherein the electric brush assembly (1) comprises a mounting frame (36), a first electric brush (31) and a second electric brush (30), the first electric brush (31) and the second electric brush (30) are elastically mounted on the mounting frame (36), and the mounting frame (36) is sleeved over the rotating shaft (9).

8. The motor device according to claim 7, wherein a first sliding ring (8) and a second sliding ring (32) are arranged on the rotating shaft (9), the first sliding ring (8) is in contact with the first electric brush (31), the second sliding ring (32) is in contact with the second electric brush (30), and the first sliding ring (8) and the second sliding ring (32) are arranged in the axial direction of the rotating shaft (9).

9. The motor device according to claim 7 or 8, wherein the first electric brush (31) and the second electric brush (30) are slidably arranged on the mounting frame (36), and an elastic element is arranged between the mounting frame (36) and the first electric brush (31) and an elastic element is arranged between the mounting frame (36) and the second electric brush (30).

10. The device according to any one of claims 7 to 9, wherein the first electric brush (31) and the second electric brush (30) have the same configuration.

11. The motor device according to any one of claims 2 to 10, further comprising a cable mounting seat (4), the cable mounting seat (4) being connected to a conducting wire of the first windings (5).

12. The motor device according to claim 11, wherein the cable mounting seat (4) comprises a fixed part (34) and an accommodating part (33);
wherein the accommodating part (33) is provided with an accommodating groove (331);
wherein the accommodating groove (331) is configured to accommodate the conducting wire;
wherein the accommodating part (33) is connected to the fixed part (34); and the fixed part (34) is located at a nick of the accommodating groove (331);
optionally wherein the cable mounting seat (4) further comprises a conducting bar (35); a connecting hole is formed in one end of the conducting bar (35); the connecting hole is configured to connect a wire end of the conducting wire of the first winding (5); a first through hole (351) is formed in the other end of the conducting bar (35); and the fixed part (34) is provided with a threaded hole (343) opposite to the first through hole (351);
further optionally wherein the fixed part (34) has a bottom and a side; the accommodating part (33) is located at the bottom; and the threaded hole (343) is located at the side;
still further optionally wherein a sink groove (342) is formed in the side of the fixed part (34), the threaded hole (343) is formed in the sink groove (342), and an end of the conducting bar (35) is embedded into the sink groove (342).

13. The motor device according to claim 12, wherein the fixed part (34) is provided with a first convex lug (341), the accommodating part (33) is provided with a second convex lug (332), and the first convex lug (341) is connected to the second convex lug (332).

14. The motor device according to any one of claims 1 to 13, further comprising a speed reducing mechanism and a heat exchange mechanism, the speed reducing mechanism being connected to the rotating shaft (9), the heat exchange mechanism being connected to the speed reducing mechanism;
optionally wherein the heat exchange mechanism comprises a plurality of laminated metal sheets, and a heat conducting flow channel is formed between two adjacent metal sheets.

15. A vehicle, comprising the motor device according to any one of claims 1 to 14.
